## Europäisches Patentamt

## European Patent Office

## Office européen des brevets

(19)

(11) Veröffentlichungsnummer: **0 077 767**
**B2**

(12)

# NEUE EUROPÄISCHE PATENTSCHRIFT

(45) Veröffentlichungstag der neuen Patentschrift:
**24.02.88**

(21) Anmeldenummer: **82890135.5**

(22) Anmeldetag: **24.09.82**

(51) Int. Cl.⁴: **C 09 K 3/18,** C 09 K 5/00

(54) Gefrierschutz- und Eislösemittel sowie Verfahren zur Enteisung vereister Oberflächen wie Strassen, Wege und dgl. bzw. zur Verhinderung der Vereisung.

(30) Priorität: **12.10.81 AT 4378/81**

(43) Veröffentlichungstag der Anmeldung:
**27.04.83 Patentblatt 83/17**

(45) Bekanntmachung des Hinweises auf die Patenterteilung:
**17.04.85 Patentblatt 85/16**

(45) Bekanntmachung des Hinweises auf die Entscheidung über den Einspruch:
**24.02.88 Patentblatt 88/8**

(84) Benannte Vertragsstaaten:
**BE CH DE FR GB IT LI LU NL SE**

(56) Entgegenhaltungen:
**EP-A-0 035 834**
**DE-A-3 016 623**
**DE-B-1 285 835**
**GB-A-569 364**
**GB-A-1 111 936**
**US-A-4 254 166**

**Römpp Chemie Lexikon (1950), Seite 269**

(73) Patentinhaber: **Lang & Co., chemisch- technische Produkte Kommanditgesellschaft, Herzog Friedrichplatz 1, A-3001 Mauerbach/Wien (AT)**

(72) Erfinder: **Kaes, Gertrude, Dipl.- Ing., Kohlmarkt 1, A-1010 Wien (AT)**

(74) Vertreter: **Puchberger, Peter, Dipl.- Ing., Patentanwälte Dipl.- Ing. Georg Puchberger Dipl.- Ing. Rolf Puchberger Dipl.- Ing. Peter Puchberger Singerstrasse 13, A-1010 Wien (AT)**

EP 0 077 767 B2

## Beschreibung

Die Erfindung betrifft Gefrierschutz- und Eislösemittel. Solche Mittel werden zur Erniedrigung des Gefrierpunktes wäßriger Lösungen verwendet, um einerseits die Bildung von festem Eis zu verhindern bzw. andererseits bereits gebildetes Eis zur Auflösung zu bringen. Als solche Mittel sind bisher anorganische Salze, wie Natriumchlorid, Magnesiumchlorid, Calziumchlorid, Kaliumphosphate, Natriumphosphate, Ammoniumphosphate, Ammoniumnitrat, Erdalkalinitrate, Magnesiumnitrat, Ammoniumsulfat, Alkalisulfate sowie organische Verbindungen wie niedrigmolekulare Alkohole, Glykole, Glycerin, Lactate und Harnstoff bekannt und auch in Verwendung.

Neben der gefrierpunkterniedrigenden Wirkung auf Wasser ist beim Einsatz dieser Produkte die Frage der Korrosivität des Mittels auf die verschiedenen Werkstoffe sowie des Umweltschutzes von besonderer Bedeutung. Es ist bekannt, daß die bisher meistverwendeten, da billigsten Eislöse und Gefrierschutzmittel Natriumchlorid bzw Calzium-Magnesiumchlorid darstellen. Der Chlorgehalt bedingt in wäßriger Lösung allerdings sowohl starke Korrosion von Eisen und anderen metallischen Werkstoffen, Beton und Mauerwerk, als auch starke Pflanzenschädigungen. Der Chlorgehalt in solchen Streusalzen oder Salzlösungen erschwert bekanntlich die Wasseraufnahme in den Wurzeln von Bäumen und niedrigen Pflanzen. Die Chloride wandern dann in die Blätter und verursachen dort Schädigungen. Die Blätter werden vom Rand her braun und fallen frühzeitig ab. Durch Regen und tauenden Schnee werden die Chloride aus den abfallenden Blättern wieder ausgewaschen und der schädigende Chloridkreislauf beginnt von Neuem. Weiter können sich schädliche Auswirkungen auf die Pfoten von Haustieren sowie das menschliche Schuhwerk und die Kleidung ergeben. Auch andere bekannte anorganische Salze können zur Umweltgefährdung beitragen sowie die Korrosionsgefahr von Werkstoffen erhöhen.

Bei der Verwendung von bekannten organischen Eislöse und Gefrierschutzmitteln kann die Korrosionsgefahr leichter gebannt werden, da viele organische Verbindungen nicht agressiv auf Werkstoffe sind und auch durch Inhibitoren besonders bei Metallen korrosionsverhindernd eingestellt werden können. Neben wirtschaftlichen Fragen - organische Verbindungen sind meist wesentlich teurer als gleich gefrierpunkterniedrigende Verbindungen anorganischer Natur - ergibt sich jedoch ebenfalls das Problem des Umweltschutzes. So ist z. B. das als Gefrierschutzmittel in Kraftfahrzeugen häufig verwendete Monoäthylenglykol äußerst schädlich im Abwasser. Alkohole, wie z. B. Methylalkohol, können ebenfalls giftige Wirkungen haben und weisen besonders bei niedrigen Molekulargewichten eine hohe Flüchtigkeit auf, was Geruchsbelästigung und Brandgefahr mit sich bringen kann. Weiter wird durch diese Substanzen auch die Eisbildung nicht nachhaltig verhindert.

Durch Luftsauerstoffoxydation solch ein- oder mehrwertiger Alkohole können sich Säuren bilden, welche wieder zur verstärkten Korrosion von Werkstoffen Anlaß geben. Es werden diesen organischen Gefrierschutzlösungen daher oft Puffersubstanzen, wie Kaliumphosphate oder Borax sowie Metallkorrosionsinhibitoren wie Benzo-, Tolyltriazole, Phosphonate, Alkanolaminphosphate oder Molybdate zugegeben.

Ein typisches Beispiel eines solchen Eislöse- und Gefrierschutzmittels ist in der CA-PS-969 345 enthalten. Solche Gemische werden auch zur Verbesserung der Sicherheit auf Start- und Landebahnen von Flugplätzen eingesetzt, wie z. B. Gemische aus Formamid, Harnstoff, Wasser und Chromat (CA-PS-981 440). Nach heutiger Erkenntnis sollen aber sowohl Formamid als auch Chromate wegen etwaiger gesundheitsgefährdender bzw. abwasserschädlicher Wirkungen für solche Zwecke nicht mehr angewendet werden.

Zum raschen Auftauen von eis- und schneebedeckten Flächen werden laut DE-AS-1 459 639 Gemische von Formamid oder Formamidderivaten, wasserlöslichen einwertigen Alkoholen und Glykoläthern empfohlen. In der CS-PS-184 118 werden Mischungen von Äthanol mit Harnstoff und Inhibitoren als flüssige Eislöser für Flugplätze und Straßen beschrieben. Die Probleme mit den dabei verwendeten organischen Produkten, wie niedrigen Alkoholen, wurden bereits oben beschrieben.

Niedrigmolekulare Monocarbonsäuren wurden als Gefrierschutzmittel bereits empfohlen, wie die Alkalisalze von Ameisen-, Essig-, Propion- und Buttersäure laut US-PS-2 233 185. Gemische von Harnstoff mit Salzen niedrig gesättigter Monocarbonsäuren, vorzugsweise Ameisen- und Essigsäure werden in der AT-PS-271 389 beschrieben. Diese Mittel weisen aber ebenfalls Nachteile auf.

In der GB-PS-1 111 936 ist ebenfalls ein Eislösemittel beschrieben, welches die Monocarbonsäuren Ameisensäure und Essigsäure bzw. deren Salze gemeinsam mit Harnstoff enthält. Aus Gründen des Umweltschutzes und im Hinblick auf die Zerstörung von kalziumhaltigen Baustoffen, wie z. B. Beton, und im Hinblick auf die Korrosion eisenhaltiger Stoffe sind diese wasserlöslichen Salze von Monocarbonsäuren jedoch in der Praxis nicht verwendbar. Jeder Fachmann kennt den stechenden Geruch auch verdünnter Ameisensäure oder Essigsäure, und eine Anwendung derartiger Lösungen auf Straßen ist unmöglich. Eisenwerkstoffe werden durch die genannten Säuren stark angegriffen. Auf Pflanzen wirken die genannten Stoffe schädlich. Weiter wird in der genannten GB-PS-1 111 936 allgemein auf die Verwendung von gesättigten Carbonsäuren mit bis zu 6 Kohlenstoffatomen hingewiesen, ohne daß dem Fachmann ein Hinweis gegeben wird, daß besondere Carbonsäuren, nämlich wasserlösliche Salze von Dicarbonsäuren mit mindestens 3 Kohlenstoffatomen gemäß vorliegender Erfindung, besondere und überraschende Vorteile bieten.

Weiter ist die DE-OS-2 933 318 bekannt geworden, die die Verwendung von Natrium-/Kaliumchlorid in Verbindung mit CaO, CaCO$_3$, MgO und/oder MgCO$_3$ beschreibt. Auch hier sind jedoch schädliche Chloride neben unlöslichen Anteilen an Kalk, Dolomit enthalten.

Ein Teil der Patentliteratur beschäftigt sich mit einer Korrosionsverminderung von Streusalz (NaCl), wie z. B. durch Zusatz von 0,1 - 10 % Kalkstickstoff gemäß DE-PS-2 847 350, der wohl die Metallkorrosion verringern kann, jedoch nicht die schädlichen Wirkungen von NaCl auf Pflanzen etc. vermeidet. Ähnliches gilt für das Auftausalz (enthaltend 80-99,9 Gew.-% Chloride) mit einem Korrosionsinhibitor laut DE-OS-2 161 522.

Aufgrund der vorbeschriebenen Probleme mit chloridhaltigen Eislöse- und Gefrierschutzmitteln hat es seit langem Bestrebungen gegeben, andere Substanzen einzusetzen, wie Ammonsulfat, Harnstoff, Natriumnitrat. Solche Gemische mit verschiedenen Korrosionsinhibitoren werden z. B in der AT-PS 191 383 sowie in der US-PS-2 980 620 beschrieben.

Als Gefrierschutzmittel besonders für Löschflüssigkeiten werden in der FR-PS-2 102 933 Gemische von Harnstoff, Ammonchlorid, -phosphat, -sulfat beschrieben. Auch in der US-PS 3 624 243 werden Gemische von Harnstoff und Ammonnitrat mit Äthylenglykol als Enteisungsflüssigkeit empfohlen. Alle diese Zusammensetzungen weisen jedoch Nachteile bei ihrer Verwendung auf. Harnstoff selbst ist bekanntlich bei Temperaturen von unter -8° C als Enteiser unwirksam (kryohydratischer Punkt -11,5°C).

Ammonsalze hingegen, welche tiefere Eislösetemperaturen aufweisen können, greifen Beton an. Nichtagressive Wasser sollen einen NH$_4$+-Gehalt von unter 15 mg pro Liter H$_2$O haben, was beim Einsatz solcher Salze als Eislösemittel in der Praxis nicht erfüllbar ist. Auch der Sulfatgehalt soll bei nicht angreifenden Wassern bei Portlandzement unter 200 mg SO$_4''$/Liter, bei Hochofenzement unter 400 mg und bei erhöht sulfatbeständigem Zement (max. 3 % Tricalziumaluminat) unter 600 mg SO$_4''$/Liter Wasser liegen. Diese Werte sind bei Einsatz von wasserlöslichen Sulfaten als Eislöser praktisch ebenfalls nicht einhaltbar. Phosphate können ökologisch sehr schädlich sein und in vielen Ländern wird deren Gehalt im Abwasser immer mehr beschränkt.

Die Verwendung von Nitraten ist sowohl aus Gründen der Abwassergefährdung als auch durch deren Gefährlichkeit im trockenen Zustand besonders bei Anwesenheit organischer Substanzen (Explosionsgefahr) nicht erwünscht.

Es ist Aufgabe der vorliegenden Erfindung, Eislöse- und Gefrierschutzmittel zu schaffen, welche keine Abwassergefährdung darstellen, für Pflanzen, Tiere und Menschen unschädlich sind sowie keine Korrosionen an Werkstoffen, wie insbesondere Metalle und Baustoffe, verursachen. Außerdem soll die gefrierpunkterniedrigende Wirkung auf Wasser stark genug sein, um Eisbildung bei Temperaturen von -20°C und darunter, wie sie in den Gebieten der industriellen Welt vorkommen können, zu verhindern.

Die Erfindung ist in erster Linie dadurch gekennzeichnet, daß das Gefrierschutz- und Eislösemittel als gefrierpunkterniedrigende Substanz wasserlösliche Salze einer Dicarbonsäure bzw. eines Dicarbonsäuregemisches mit mindestens 3 Kohlenstoffatomen und gegebenenfalls weitere Stoffe wie Lösungsmittel oder andere Gefrierschutz- und Eislösemittel enthält. Weitere bevorzugte Ausgestaltungen der Erfindung sind in den Unteransprüchen gekennzeichnet.

Gemische von Dicarbonsäuren mit mindestens 3 Kohlenstoffatomen fallen großtechnisch an, wobei sie als Alkali- und Ammoniumsalze eine genügend große Löslichkeit in Wasser aufweisen. Sie erniedrigen den Gefrierpunkt wäßriger Lösungen auf unter -20°C, weisen Korrosionsschutzeigenschaften auf und sind mit organischen Monocarbonsäuren in ihrer Gewichtseinheit preislich günstig im Vergleich. Ein großer Vorteil der erfindungsgemäß eingesetzten Dicarbonsäure bzw. -gemische liegt auch darin, daß deren wäßrige Salzlösungen geruchfrei sind (im Gegensatz zu Formiaten, Azetaten etc.) und in bestimmten Mindestkonzentrationen Korrosionsschutzmittel für Metalle darstellen. Es wurde gefunden, daß z. B. eine Mindestkonzentration von 1,5 Mol Bernsteinsäure (177 g/l) bzw. 0,4 Mol Adipinsäure (58 g/l) in Form ihrer wasserlöslichen Salze Gußeisen bei einem pH-Wert von 7,5/7,8 guten Korrosionsschutz verleiht. Ein weiterer Vorteil der erfindungsgemäßen Dicarbonsäuregemische liegt in deren geringen Wasserlöslichkeit bei Salzen mehrwertiger Kationen. So hat z. B. das relativ niedrigmolekulare Calciumsuccinat bei +10°C eine Löslichkeit von lediglich 0,2 g/100 g H$_2$O, was eine Schutzwirkung auf Beton und andere Baustoffe gegen anderweitige korrosive Bestandteile im Wasser ermöglicht.

Die nachfolgenden Beispiele sollen vorliegende Erfindung beispielsweise näher erläutern:

**Beispiel 1**

Eine Gefrierschutzlösung wurde aus einem industriell anfallenden Gemisch von Dicarbonsäure hergestellt, bestehend aus 30-35 Gew.-% Adipinsäure, 40-50 Gew.-% Glutarsäure und 20-25 Gew.-% Bernsteinsäure. Der Gehalt an Dicarbonsäuren mit 5 und 6 Kohlenstofatomen betrug 75-80 %, die Löslichkeit des Gemisches als Kaliumsalz im Wasser war dennoch sehr gut.

35,2 Gew.-Teile dieses Dicarbonsäuregemisches ergaben mit 30 Gew.-Teilen KOH (Ätzkali) und 34,8 Gew.-Teilen Wasser eine stabile Lösung, welche einen Stock- und auch Wiederverflüssigungspunkt von unter -20°C aufwies. Selbst bei Verdünnung dieser Lösung mit weiteren 100 Gew.-Teilen Wasser wurde noch ein Stockpunkt von unter -10°C erreicht.

Die obigen Lösungen ergaben sehr guten Korrosionsschutz auf metallischen Werkstoffen. Sie erwiesen sich als stabil und wurden durch Luftsauerstoff in ihrer Wirkung nicht veränden. Die Lösungen zeigten weiter eine gute Pufferwirkung gegen pH-Wert-Veränderungen und stellen somit ausgezeichnete Gefrierschutzmittel und Eislöser mit langer Gebrauchsfähigkeit dar. Die Lösungen sind z. B. für die Übertragung von Wärme und Kälte (Kühler, Radiatoren, Wärmeaustauscher in Industrie, Gewerbe, Haushalt) bei Temperaturen von -20°C bis +100°C einsetzbar

**Beispiel 2**

Eine Lösung bestehend aus 30 Gew.-Teilen des beim Beispiel 1 genannten Dicarbonsäuregemisches, 27,3 Gew.-Teilen Ätzkali, 10 Gew.-Teilen Harnstoff und 32,7 Gew.-Teilen Wasser wies ebenfalls Stock- und Wiederverflüssigungspunkte von unter -20°C auf. Eine Lösung mit weiteren 100 Gew.-Teilen Wasser ergab einen Stockpunkt von unter -14°C (Wiederverflüssigungspunkt bei -14°C). Der pH-Wert der Lösung betrug 7,6 und erwies sich bestens sowohl als korrosionsschützende und alterungsstabile Wärmeübertragungsflüssigkeit analog Beispiel 1, als auch als Löser von bereits gebildetem Eis geeignet. Die Ungiftigkeit der Lösung wurde durch die ALD 50 bei Ratten p. o. mit ca 5000 mg Dicarbonsäuregemisch/kg Körpergewicht dokumentiert. Die einzelnen im Gemisch befindlichen Dicarbonsäuren finden z. B. auch als Nahrungsmitteladditive zu anderen Zwecken Verwendung

**Beispiel 3**

Eine wäßrige Lösung bestehend aus 30 Gew.-Teilen Harnstoff, 15 Gew.-Teilen des Dicarbonsäuregemisches gemäß Beispiel 1, 5 Gew.-Teilen 75 %-iger Phosphorsäure, 16,9 Gew.-Teilen Ätzkali und 33,1 Gew.-Teilen Wasser ergab einen Stockpunkt von unter -20°C und bei Verdünnung mit 100 Gew.-Teilen Wasser einen solchen von unter -11°C. Die Lösung zeigte ausgezeichnete Korrosionsschutzeigenschaften sowohl für EEisen- als auch Leichtmetalle und erwies sich auch als Eislöser auf Flugplätzen geeignet.

**Beispiel 4**

Eine Lösung bestehend aus 30 Gew.-Teilen Propylenglykol, 15 Gew.-Teilen Dicarbonsäuregemisch laut Beispiel 1, 5 Gew.-Teilen 75 %-iger Phosphorsäure, 17,5 Gew.-Teilen Ätzkali und 32,5 Gew. Teilen Wasser ergaben einen Stockpunkt von unter -20°C und bei Verdünnung mit 100 Gew.-Teilen Wasser einen solchen von -14°C. Verwendung wie Beispiele 1 bis 3.

**Beispiel 5**

Während in den vorhergehenden Beispielen die Verwendung von Dicarbonsäuregemischen beschrieben wurde, wurde in diesem Beispiel das Kalisalz reiner Bernsteinsäure in Verbindung mit Harnstoff als Gefrierschutzmittel untersucht. Die Lösung bestand aus 25 Gew.-Teilen Harnstoff, 33,5 Gew.-Teilen Kaliumsuccinat und 41,5 Gew.-Teilen Wasser. Der Stockpunkt dieser Lösung lag bei -13°C, wobei eine klare Wiederverflüssigung bei +2°C eintrat. Die Verdünnung dieser Lösung mit 100 Gew.-Teilen Wasser ergab einen Stockpunkt von -10/-11°C

Der Einsatz des reinen, niedrigermolekularen Kaliumsuccinates zeigt sich in der Wirkung als Gefrierschutz und Korrosionsschutz gegenüber den Dicarbonsäuren als nicht so günstig, könnte unter bestimmten Umständen aber doch vorteilhaft sein.

**Beispiel 6**

Die im Beispiel 2 genannte Lösung wurde aus einem Sprüh- und Streuwagen zusammen mit einem Feststoffgemisch bestehend aus 40 % Harnstoff und 60 % Ammonsulfat auf Eis von Betonstraßen aufgebracht. Bei Einsatz von 20 g/m² beider Eislösemittel gemeinsam konnte auf einer völlig vereisten Fahrbahn in der Stärke von 5 mm Eis nach 5 Minuten bereits ein Tauprozeß festgestellt werden. Nach 10 Minuten war die Eisschicht völlig gelöst und konnte mit Versuchs fahrzeugen eine völlig normale Vollbremsung ausgeführt werden. Bei stellenweisen Eisdicken von 2 cm (Spurrillen) war bei Verdoppelung der Einsatzmenge (insgesamt 40 g/m²) die Straße nach 10 Minuten bereits matschig und nach 20 Minuten die Eisschicht weggelöst.

Es zeigte sich bei diesem Versuch in der Praxis nicht nur eine sehr rasche und anhaltende Eislösewirkung der eingesetzten Mittel, sondern es wurde die Oberfläche der Betonstraße auch bei Langzeitkontakt trotz Einsatz von Ammonsalzen und wasserlöslichen Sulfaten nicht angegriffen. Die Reaktion von Ammonsalzen mit alkalischen Betonbestandteilen und von $SO_4^{2-}$ mit $Ca^{2-}$ zu Gips wird durch das in wäßriger Lösung befindliche Dicarbonsäuregemisch behindert, da sich ein schützender, praktisch wasserunlöslicher molekularer Oberflächenfilm auf dem Beton aus unlöslichen Dicarbonsäuresalzen mehrwertiger Kationen bilden dürfte.

**Beispiel 7**

Die im Beispiel 2 beschriebene Lösung wurde als Feuchtstreuung zusammen mit festem Harnstoff zur Eislösung und -freihaltung von Start- und Landepisten auf Flugplätzen eingesetzt. Es wurde durch die Lösung laut Beispiel 2 nicht nur eine Eislösung bei wesentlich tieferen Temperaturen und rascher erzielt, als dies mit Harnstoff allein möglich gewesen wäre, sondern auch das Wegblasen des granulierten bzw. pulverigen Harnstoffes wurde durch Befeuchtung mit der Lösung verringen. Die Angriffswirkung von Harnstoff auf Leichtmetalle wurde durch den Gehalt an Lösung gemäß Beispiel 2 noch wesentlich verringert.

**Beispiel 8**

Das unter Beispiel 1 genannte Gemisch von Dicarbonsäure wurde mittels Ammoniak in eine konzentrierte wäßrige Lösung gebracht. Die Lösung wurde mit Erfolg als Eis- und Schneelöser für asphaltierte Wege und Plätze verwendet.

**Beispiel 9**

Ein getrocknetes, pulveriges Kaliumsalz des Dicarbonsäuregemisches laut Beispiel 1 wurde mit festem Harnstoff und Ammonsulfat vermischt. Das Pulver hatte eine gute Lagerbeständigkeit und geringe Klumpneigung und war als Eislöser bis zu Temperaturen von -24°C einsetzbar.

**Beispiel 10**

Das Dicarbonsäuregemisch laut Beispiel 1 wurde mit Natronlauge (NaOH) in wäßrige Lösung gebracht. Die Lösung ist insbesondere als Gefrierschutzmittel für Wärmeübertragungsanlagen geeignet. Als Eislöser wird es in verschiedenen Gebieten nicht empfohlen sein, da laut neueren Erkenntnissen ein Natriumgehalt von Eislösern auf Pflanzen, wie insbesondere Bäume, schädliche Auswirkungen haben kann.

**Beispiel 11**

60 Gew.-Teile eines Kaliumsalzes von Dicarbonsäuren bestehend aus einem Gemisch von 40 % Malonsäure, 30 % Bernsteinsäure und 30 % Glutarsäure wurden mit 40 Gew.-Teilen Wasser in Lösung gebracht. Der Gefrierpunkt der Lösung lag unter -20°C und die Lösung ergab eine gute Eislöse- und Gefrierschutzwirkung.

In den oben angeführten Beispielen ist die Zugabe von Laugen wie Ätzkali bzw. von Ammoniak zu den Dicarbonsäuregemischen beschrieben. Es werden die Dicarbonsäuregemische in die entsprechenden wasserlöslichen Salze übergeführt. Sollen weder Dicarbonsäure noch Lauge in der resultierenden Salzlösung frei vorliegen, sind die entsprechenden stöchiometrischen Verhältnisse einzuhalten. In bestimmten Fällen kann es auch vorteilhaft sein, den einen oder anderen Bestandteil im Überschuß vorzusehen, so z. B. um die Korrosionsschutzwirkung zu erhöhen.

**Patentansprüche**

1. Gefrierschutz- und Eislösemittel, dadurch gekennzeichnet, daß es als gefrierpunkterniedrigende Substanz wasserlösliche Salze einer Dicarbonsäure bzw. eines Dicarbonsäuregemisches mit mindestens 3 Kohlenstoffatomen und gegebenenfalls weitere Stoffe wie Lösungsmittel oder andere Gefrierschutz- und Eislösemittel enthält.

2. Mittel nach Anspruch 1, dadurch gekennzeichnet, daß das Dicarbonsäuregemisch ein Gemisch von Adipin-, Glutar- und Bernsteinsäure ist und als Kalisalz vorliegt.

3. Mittel nach Anspruch 1, dadurch gekennzeichnet, daß es Kalisalze eines Gemisches von Malon-, Bernstein- und Glutarsäure enthält.

4. Mittel nach Anspruch 1, dadurch gekennzeichnet, daß es Kalisalze von Gemischen aus zumindest 2 der folgenden Dicarbonsäuren: Malon-, Bernstein-, Glutar- und Adipinsäure, gegebenenfalls mit geringeren Anteilen von Dicarbonsäuren mit 8 und/oder 10 Kohlenstoffatomen, enthält.

5. Mittel nach Anspruch 1, dadurch gekennzeichnet, daß das Dicarbonsäuregemisch als Natrium-, Ammonium- oder/und organisches Aminsalz vorliegt.

6. Mittel nach einem der vorhergehenden Ansprüche 1 bis 5, dadurch gekennzeichnet, daß das Mittel als weiteren Stoff Harnstoff und/oder anorganische Ammoniumverbindungen und/oder wasserlösliche Phosphate enthält.

7. Verfahren zur Enteisung vereister Oberflächen wie Straßen, Wege u. dgl. bzw. zur Verhinderung der Vereisung, dadurch gekennzeichnet, daß auf die Oberfläche ein Gefrierschutz- und Eislösemittel gemäß einem oder mehreren der Ansprüche 1 bis 6 aufgebracht wird.

## Claims

1. Antifreezing and ice melting composition, characterized in that it contains as substance for reducing the freezing point water soluble salts of a dicarboxylic acid or a mixture of dicarboxylic acids having at least three carbon atoms, and eventually further substances such as solvents or other antifreezing and ice melting preparations.

2. Composition according to claim 1, characterized in that the mixture of dicarboxylic acids is a mixture of adipic, glutaric and succinic acid and that it is a potassium salt.

3. Composition according to claim 1, characterized in that it contains potassium salts of a mixture of malonic, succinic and glutaric acid.

4. Composition according to claim 1, characterized in that it contains potassium salts of mixture of at least two of the following dicarboxylic acids: malonic, succinic, glutaric and adipic acids, and eventually containing smaller portions of dicarboxylic acids having 8 and/or 10 carbon atoms.

5. Composition according to claim 1, characterized in that the dicarboxylic acid mixture is a sodium, anmonium or/and organic amine salt.

6. Composition according to one of the preceding claims 1 to 5, characterized in that the composition contains as further substance urea and/or inorganic ammonium compound and/or water soluble phosphates.

7. Method for deicing ice-covered surfaces such as roads, walks and the like or for preventing from icing-up, characterized in that an antifreezing and ice melting composition according to one or several of the claims 1 to 6 is applied to the surfaces.

## Revendications

1. Agent antigel et de déglaçage, caractérisé en ce qu'il contient comme substance pour la réduction du point de congélation des sels solubles dans l'eau d'un acide dicarboxylique ou d'un mélange d'acides dicarboxyliques ayant au moins 3 atomes de carbone, et éventuellement d'autres substances, telles que des solvants ou d'autres agents antigel et de déglaçage.

2. Agent suivant la revendication 1, caractérisé en ce que le mélange d'acides dicarboxyliques est un mélange d'acide adipique, glutarique et succinique et en ce qu'il se présente sous la forme d'un sel potassique.

3. Agent suivant la revendication 1, caractérisé en ce qu'il contient des sels potassiques d'un mélange d'acide malonique, d'acide succinique et d'acide glutarique.

4. Agent suivant la revendication 1, caractérisé en ce qu'il contient des sels potassiques de mélanges d'au moins deux des acides dicarboxyliques suivants: acide malonique, acide succinique, acide glutarique et acide adipique, éventuellement avec des fractions plus faibles d'acides dicarboxyliques ayant 8 et/ou 10 atomes de carbone.

5. Agent suivant la revendication 1, caractérisé en ce que le mélange d'acides dicarboxyliques se présente sous la forme d'un sel de sodium, d'ammonium et/ou d'amine organique.

6. Agent suivant l'une des revendications 1 à 5, caractérisé en ce que l'agent contient, comme autre substance, de l'urée et/ou des composés d'ammonium inorganique et/ou des phosphates solubles dans l'eau.

7. Procédé de déglaçage de surfaces gelées, telles que des rues, chemins ou similaires, ou pour empêcher le verglaçage, caractérisé en ce qu'un agent antigel et de déglaçage suivant une ou plusieurs des revendications 1 à 6 est appliqué sur la surface.